# EUROPEAN PATENT SPECIFICATION

(11) **EP 2 283 563 B1**
(45) Date of publication and mention of the grant of the patent: **07.09.2016**
(21) Application number: 09753858.1
(22) Date of filing: 25.05.2009
(51) Int. Cl.: H02K 5/00, H02K 5/04, H02K 5/08

(54) **IMPROVED ELECTRIC MOTOR**
VERBESSERTER ELEKTRISCHER MOTOR
MOTEUR ÉLECTRIQUE AMÉLIORÉ

(30) Priority: 30.05.2008 IT PD20080159
(43) Date of publication of application: 16.02.2011
(73) Proprietor: SIT S.P.A., 35129 Padova (IT)
(72) Inventor: RANALLI, Antonio, 66020 Scerni (CH) (IT); USCI, Rosalino, 60035 Jesi (AN) (IT); MARCANTONI, Michele, 60020 Polverigi (AN) (IT); MAZZIERI, Paolo, 60027 Osimo (AN) (IT)
(74) Representative: Fabris, Stefano
(86) International application number: PCT/EP2009/056321
(87) International publication number: WO 2009/144203

(56) References cited:
- EP-A- 1 372 250
- EP-A- 1 798 526
- WO-A-02/48444
- GB-A- 2 426 636

## Description

### Technical field

The present invention relates to an electric motor having the characteristics set out in the preamble to the main claim.

### Technological background

An electric motor having the features outlined above is known from GB2426636. WO02/48444 is also prior art to the present invention.

In the relevant technical field, the stator assembly of the motor is typically supported between a pair of opposed caps in which central seats are provided for housing rolling-contact bearings or bushings for supporting the shaft, onto which the rotor assembly of the motor is keyed.

The above-mentioned stator assembly typically has a laminated structure formed by a plurality of superimposed plates that are typically ring-shaped with tooted appendages which project radially inwardly and on which the copper stator windings are mounted. An electrical insulator in the form of a cage or casing otherwise known by the term "cartridge" is conventionally provided between the plates and the copper windings. The function of this element is mainly to ensure adequate electrical insulation.

The opposed caps which support the shaft are also held together axially by means of clamping screws which extend axially between them and have the function of fastening the stator plates as an assembly by clamping the caps to one another.

In these conventional structures, motor support elements are also provided for enabling the motor to be fixed to supporting structures (which may be stationary support bases or fan flanges in applications with electric fans) with the interposition of vibration-damping elements or shock-absorbers in general. The support elements are typically produced independently of the motor structure and are arranged to be connected, for example, to one of the opposed caps, by means of separate clamping screws or by means of the same screws which clamp the stator assembly of the motor.

### Description of the invention

A main object of the present invention is to provide an electric motor which has a simplified structure in comparison with the solutions of the prior art, facilitating assembly and reducing the number of components, to achieve greater compactness and reduced production costs.

This and other objects which will become clearer from the following description are achieved by the invention by means of an electric motor formed in accordance with the appended claims.

### Brief description of the drawings

Further characteristics and advantages of the invention will become clearer from the following detailed description of a preferred embodiment thereof which is described, by way of non-limiting example, with reference to the appended drawings, in which:
Figure 1 is a perspective view of an electric motor formed in accordance with the present invention, and

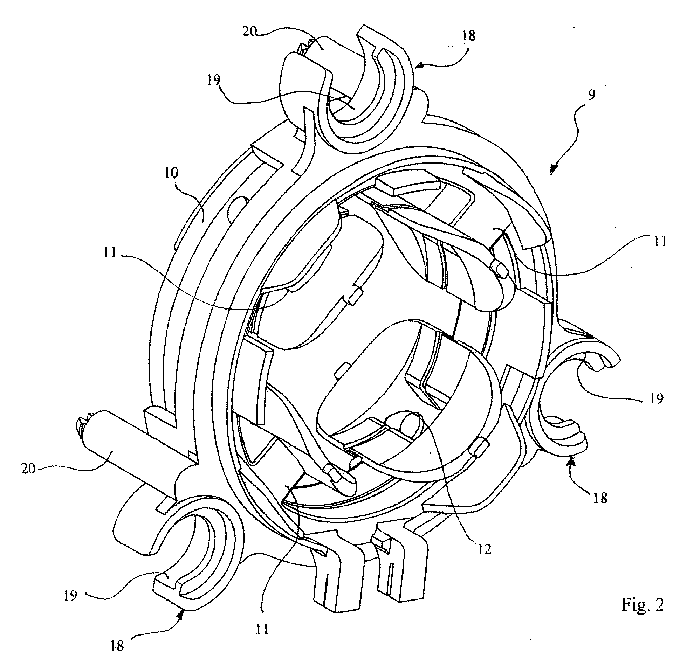

Figure 2 is a perspective view of a detail of the motor of the preceding drawing.

### Preferred embodiment of the invention

With reference to the drawings mentioned, an electric motor formed in accordance with the present invention is generally indicated 1 and comprises a rotor assembly 2 fixed for rotation with the motor shaft 3, the axis of which is indicated X. Moreover, the motor shaft 3 is supported for rotation about the axis X at axially opposite ends of the rotor assembly 2 by a pair of rotational support means, both indicated 4, only one of which is visible in the drawings.

A stator assembly of the motor, indicated 6, includes a first portion 6a comprising ferromagnetic plates 7 (shown schematically) and a second portion 6b comprising windings of electrically conductive wire which are only partially visible in the drawings and are shown schematically.

The plates are shaped as rings having four teeth 7a (not shown in the drawings) which extend radially towards the axis X and are arranged at regular angular intervals, each corresponding winding of the stator portion being wound around a respective tooth.

An element, generally indicated 9, made of electrically insulating material, is interposed between the first and second portions 6a, 6b of the stator assembly and is formed as a type of casing having structural characteristics in addition to the functional characteristics of an electrical insulator, as will be explained further in the following description.

More particularly, the casing 9 comprises a ring 10 from which radial portions 11 extend towards the axis X, each portion having a central opening 12 which can house the corresponding tooth of the respective plate connected thereto. The electrically conductive wire of the corresponding conductive winding is wound onto the outer lateral surface of each portion 11, thus ensuring electrical insulation between the stator portions 6a, 6b.

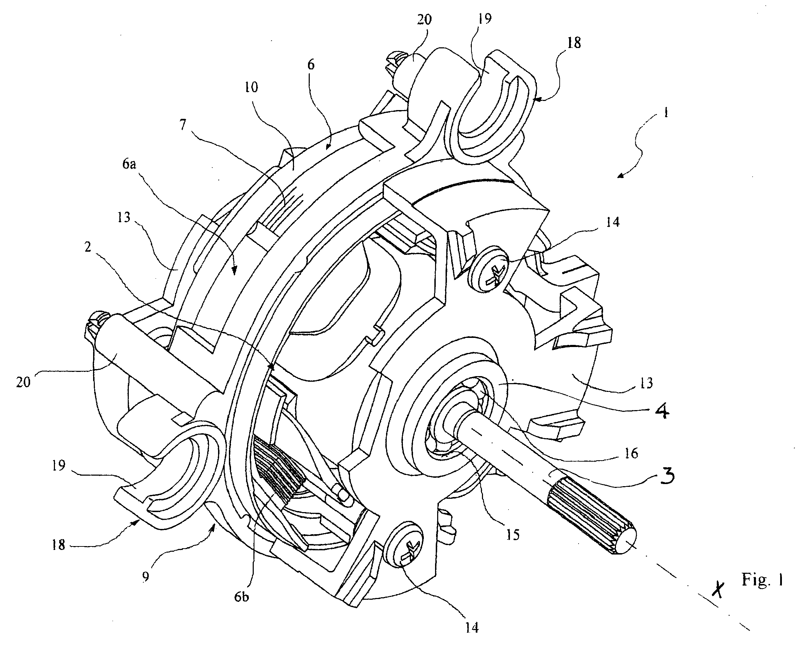

A pair of opposed caps, both indicated 13, are also provided for holding the rotor and stator assembly with the motor shaft in the mutually assembled position; axial screws 14 are provided between the caps 13 and the tightening of the screws 14 enables the above-mentioned parts to be clamped during the assembly of the motor. There may be two clamping screws 14 (as in Figure 1), or more clamping screws 14, arranged at regular angular intervals, concentrically with respect to the axis X and parallel to that axis.

Each cap 13 is also provided with central through holes 15 defining seats for housing respective bearings 16 of the corresponding rotational support means of the motor. The bearings may be of the type with rolling-contact bodies (for example with balls or with rollers) or of the sliding type, in which case they are preferably configured as bushings or other sliding elements.

According to a principal characteristic of the invention, the casing 9 of the insulating element comprises a plurality of support appendages 18 extending from the ring 10 of the casing. The appendages 18 are produced integrally with the ring 10 and project beyond the profile to define respective seats 19 for the mounting and restraint of vibration-damping elements by means of which the motor is supported on suitable supporting or connecting structures.

In a preferred embodiment, three appendages 18 are provided, arranged at 120° intervals and comprising seats 19 of open circular profile as shown clearly in the appended drawings. The support appendages 18 are advantageously produced integrally with the casing 9, for example, during the injection moulding process by which it is produced.

For reasons connected with the moulding process, the casing 9 may also be produced in two interconnectable parts; in this case, the appendages 18 are produced integrally with one or other of the parts.

As an alternative to the configuration of the seats 19, the attachment appendages 18 may be designed in a suitable manner to act as spring/shock-absorber elements in the support of the motor unit.

Furthermore, pin-shaped elements, indicated 20, are also produced integrally with the casing 9 of the insulating element and are designed to enable other components or accessories such as, for example, an electronic control board or the like, to be clamped to the motor. In the embodiment described, there are three pin-shaped elements arranged at regular angular intervals of 120°. Moreover, each pin-shaped element 20 is provided in a position adjacent the corresponding support appendage 18. Each pin-shaped element 20 also extends axially in a direction parallel to the axis X, as clearly shown in the drawings.

The invention thus achieves the objects proposed, affording the above-described advantages over known solutions.

A principal advantage lies in the fact that the insulating element, incorporating the appendages for the support of the entire motor unit, acquires a load-bearing function, simplifying the structure as a whole, resulting in a reduction in the number of components, with reduced costs for the production and assembly of the motor, as well as making the complete assembly of the motor easier and quicker.

## Claims

1. An electric motor comprising a rotor assembly (2) fixed for rotation with a motor shaft (3), a stator assembly (6) including a first portion (6a) comprising ferromagnetic plates and a second portion (6b) comprising windings of electrically conductive wire, a pair of opposed cap elements (13) which are provided at axially opposite ends of the rotor assembly (2) and can be clamped together axially in order to clamp the stator assembly (6), the rotor assembly (2) and the motor shaft (3) together, the motor shaft (3) being supported rotationally on the caps (13), and an element (9) made of electrically insulating material interposed between the first and second portions (6a, 6b) of the stator assembly, said element (9) made of insulating material comprising one or more motor support appendages (18) extending from the casing of the insulating element (9), said support appendages (18) being produced integrally with the casing (9), **characterized in that** the support appendages comprise respective seats (19) for the mounting and restraint of vibration-damping elements, and **in that** said seats (19) have an open, circular profile suitable for housing respective vibration-damping elements.

2. A motor according to claim 1, in which the support appendages (18) are arranged at regular angular intervals on the casing (9).

3. A motor according to claim 2, in which three support appendages (18) are provided, arranged on the casing at intervals of 120°.

4. A motor according to any one of the preceding claims comprising pin-shaped elements (20) which project from the casing of the insulating element (9) and are produced integrally with the casing for the fixing of respective accessories to the motor (3).

5. A motor according to Claim 4, in which the pin-shaped elements (20) extend axially parallel to the axis of the motor shaft (3).

6. A motor according to Claim 4 or Claim 5, in which each of the pin-shaped elements (20) is provided in a position adjacent the corresponding motor support appendage (18).

7. A motor according to one or more of the preceding claims in which the casing of the insulating element (9) is produced in at least two independent, interconnectable parts, the appendages (18) being produced integrally with one or with the other of the parts by means of an injection moulding process.

## Patentansprüche

1. Elektromotor, der eine Rotoranordnung (2), die zur Drehung mit einer Motorwelle (3) fixiert ist, eine Statoranordnung (6) mit einem ersten Bereich (6a), der ferromagnetische Platten aufweist, und mit einem zweiten Bereich (6b), der Wicklungen eines elektrisch leitenden Drahts aufweist, ein Paar von gegenüberliegenden Kappenelementen (13), die an axial gegenüberliegenden Enden der Rotoranordnung (2) vorgesehen sind und axial zusammengeklemmt werden können, um die Statoranordnung (6), die Rotoranordnung (2) und die Motorwelle (3) zusammenzuklemmen, wobei die Motorwelle (3) drehbeweglich auf den Kappen (13) gelagert ist, und ein Element (9) aufweist, das aus einem elektrischen Isoliermaterial hergestellt ist, das zwischen den ersten und zweiten Bereichen (6a, 6b) der Statoranordnung angeordnet ist, wobei das Element (9), das aus einem Isolier-material hergestellt ist, einen oder mehrere Motorabstütz-Fortsätze (18) aufweist, die sich vom Gehäuse des Isolierelements (9) aus erstrecken, wobei die Abstütz-Fortsätze (18) einstückig mit dem Gehäuse (9) hergestellt sind, **dadurch gekennzeichnet, dass** die Abstütz-Fortsätze jeweilige Sitze (19) zum Befestigen und Zurückhalten von schwingungsdämpfenden Elementen aufweisen, und dadurch, dass die Sitze ein offenes kreisförmiges Profil aufweisen, das zum Aufnehmen von jeweiligen schwingungsdämpfenden Elementen geeignet ist.

2. Motor gemäß Anspruch 1, in dem die Abstütz-Fortsätze (18) in regelmäßigen winkligen Abständen auf dem Gehäuse (9) angeordnet sind.

3. Motor gemäß Anspruch 2, in dem drei Abstütz-Fortsätze (18) vorgesehen sind, die auf dem Gehäuse in Abständen von 120° angeordnet sind.

4. Motor gemäß einem der vorhergehenden Ansprüche, der stiftförmige Elemente (20) aufweist, die vom Gehäuse des Isolierelements (9) hervorstehen und einstückig mit dem Gehäuse zum Fixieren von jeweiligem Zubehör am Motor (3) hergestellt sind.

5. Motor gemäß Anspruch 4, in dem sich die stiftförmigen Elemente (20) axial, parallel zur Achse der Motorwelle (3) erstrecken.

6. Motor gemäß Anspruch 4 oder 5, in dem jedes der stiftförmigen Elemente (20) in einer Position vorgesehen ist, die benachbart zum entsprechenden Motorabstütz-Fortsatz (18) ist.

7. Motor gemäß einem oder mehreren der vorhergehenden Ansprüche, in dem das Gehäuse des Isolierelements (9) aus zumindest zwei unabhängigen verbindbaren Teilen hergestellt ist, wobei die Fortsätze (18) einstückig mit dem einen oder mit dem anderen der Teile mittels eines Spritzgussverfahrens hergestellt sind.

## Revendications

1. Moteur électrique comprenant un ensemble de rotor (2) fixé pour la rotation à un arbre moteur (3), un ensemble de stator (6) comportant une première partie (6a) comprenant des plaques ferromagnétiques et une seconde partie (6b) comprenant des enroulements d'un fil électroconducteur, une paire d'éléments de chapeau (13) opposés qui sont prévus sur des extrémités axialement opposées de l'ensemble de rotor (2) et peuvent être serrés ensemble axialement afin de serrer l'ensemble de stator (6), l'ensemble de rotor (2) et l'arbre moteur (3) ensemble, l'arbre moteur (3) étant supporté en rotation sur les chapeaux (13), et un élément (9) constitué de matériau isolant électriquement interposé entre les première et seconde partie (6a, 6b) de l'ensemble de stator, ledit élément (9) constitué de matériau isolant comprenant un ou plusieurs appendices de support (18) de moteur s'étendant depuis le boîtier de l'élément isolant (9), lesdits appendices de support (18) étant produits d'un seul tenant avec le boîtier (9), **caractérisé en ce que** les appendices de support comprennent des sièges respectifs (19) pour le montage et la retenue d'éléments d'amortissement de vibration, et **en ce que** lesdits sièges (19) ont un profil circulaire ouvert adapté pour loger des éléments d'amortissement de vibration respectifs.

2. Moteur selon la revendication 1, dans lequel les appendices de support (18) sont agencés à des intervalles angulaires réguliers sur le boîtier (9).

3. Moteur selon la revendication 2, dans lequel trois appendices de support (18) sont prévus agencés sur le boîtier à des intervalles de 120°.

4. Moteur selon l'une quelconque des revendications précédentes, comprenant des éléments en forme de tige (20) qui font saillie du boîtier de l'élément isolant (9) et sont produits d'un seul tenant avec le boîtier pour la fixation des accessoires respectifs au moteur (3).

5. Moteur selon la revendication 4, dans lequel les éléments en forme de tige (20) s'étendent axialement parallèlement à l'axe de l'arbre moteur (3).

6. Moteur selon la revendication 4 ou 5, dans lequel chacun des éléments en forme de tige (20) est prévu dans une position adjacente à l'appendice de support de moteur correspondant (18).

7. Moteur selon l'une ou plusieurs des revendications précédentes, dans lequel le boîtier de l'élément isolant (9) est produit dans au moins deux parties indépendantes reliables l'une à l'autre, les appendices (18) étant produits d'un seul tenant avec une ou avec l'autre des parties à l'aide d'un procédé de moulage par injection.
